# EUROPÄISCHE PATENTSCHRIFT

(11) **EP 4 353 568 B1**
(45) Veröffentlichungstag und Bekanntmachung des Hinweises auf die Patenterteilung: **27.11.2024**
(21) Anmeldenummer: 23201598.2
(22) Anmeldetag: 04.10.2023
(51) Int. Cl.: B62D 5/04, F16H 7/02, F16H 57/01

(54) **LENKSYSTEM FÜR EIN KRAFTFAHRZEUG**
STEERING SYSTEM FOR A MOTOR VEHICLE
SYSTÈME DE DIRECTION POUR UN VÉHICULE AUTOMOBILE

(30) Priorität: 11.10.2022 BE 202205818
(43) Veröffentlichungstag der Anmeldung: 17.04.2024
(73) Patentinhaber: thyssenkrupp Presta Aktiengesellschaft, 9492 Eschen (LI); thyssenkrupp AG, 45143 Essen (DE)
(72) Erfinder: Raither, Wolfram, 9475 Sevelen (CH); Fejes, Tamás, 3400 Mezokövesd (HU); Marten, Marco, 9475 Sevelen (CH); Ficca, Riccardo, 6811 Göfis (AT)
(74) Vertreter: thyssenkrupp Intellectual Property GmbH

(56) Entgegenhaltungen:
- EP-A1- 4 039 563

## Beschreibung

### Stand der Technik

Die Erfindung betrifft ein Lenksystem für ein Kraftfahrzeug, umfassend einen Riementrieb, der einen antriebsmäßig um zwei Riemenräder umlaufenden Zahnriemen aufweist, wobei eine mit dem Riementrieb zusammenwirkende Überwachungseinrichtung vorgesehen ist, die mindestens einen Sensor zur Überwachung des Zahnriemens aufweist. Ein Verfahren zur Überwachung eines Riementriebs eines derartigen Lenksystems ist ebenfalls Gegenstand der Erfindung.

Es sind Lenksysteme für Kraftfahrzeuge bekannt, bei denen der Lenkeinschlag der lenkbaren Räder vollständig oder teilweise durch einen elektromotorischen Lenkungsantrieb erzeugt wird. Steer-by-Wire-Lenksysteme, die keine mechanische Verbindung der Lenkhandhabe mit den lenkbaren Rädern aufweisen, setzen manuell eingegebene Lenkbefehle in elektrische Steuersignale um, die den Lenkungsantrieb rein elektrisch ansteuern. Bei Hilfskraftlenkungen wird durch den Lenkungsantrieb eine die manuelle Lenkeingabe unterstützende Hilfskraft bereitgestellt.

Im Stand der Technik sind Lenkungsantriebe bekannt, die zur Momentübertragung eines elektrischen Stellmotors einen Riementrieb, bevorzugt einen Zahnriementrieb aufweisen, beispielsweise aus der EP 3 782 875 A1. Dieser umfasst ein mit dem Stellmotor verbundenes Riemenrad, ein mit einem Stellelement gekuppeltes Riemenrad, und einen als Zugmittel um die Riemenräder umlaufenden Zahnriemen.

Um die Lenkbarkeit zu gewährleisten, ist insbesondere bei einem Steer-by-Wire-Lenksystem die einwandfreie Funktion des Riementriebs maßgeblich. Die dazu erforderliche synchrone Momentübertragung vom Stellmotor auf das Stellelement kann durch Schlupf beeinträchtigt werden, beispielsweise bei einem Zahnriemen durch sogenannte Zahnsprünge, wenn ein Zahn des Zahnriemens nicht formschlüssig in die Verzahnung des Riemenrads eingreift und dadurch bei der Kraftübertragung in Zugrichtung eine Zahnbreite ausgelassen wird. Derartige Störungen können beispielsweise durch Verschleiß und zu geringe Riemenspannung ausgelöst werden, und führen zu weiter erhöhtem Verschleiß.

In der EP 3 782 875 A1 wird ein Lenkungsantrieb mit zwei unabhängig angetriebenen Riementrieben vorgeschlagen, die durch Vergleich ihrer Betriebsparameter mittels Sensoren einer Überwachungseinrichtung die Detektion von Störungen ermöglichen. Dadurch wird eine Überwachung des Betriebszustands der Riementriebe und ein sicherer Betrieb ermöglicht. Nachteilig ist jedoch der aufwendige Aufbau.

Ein Lenksystem der eingangs genannten Art ist aus der EP 4 039 563 A1 bekannt.

Angesichts der vorangehend erläuterten Problematik ist es eine Aufgabe der vorliegenden Erfindung, eine zuverlässige Überwachung des Betriebszustand mi geringerem Aufwand zu ermöglichen.

### Darstellung der Erfindung

Diese Aufgabe wird erfindungsgemäß gelöst durch das Lenksystem mit den Merkmalen des Anspruchs 1. Vorteilhafte Weiterbildungen ergeben sich aus den Unteransprüchen.

Bei einem Lenksystem für ein Kraftfahrzeug, umfassend einen Riementrieb, der einen antriebsmäßig um zwei Riemenräder umlaufenden Zahnriemen aufweist, wobei eine mit dem Riementrieb zusammenwirkende Überwachungseinrichtung vorgesehen ist, die mindestens einen Sensor zur Überwachung des Zahnriemens aufweist, ist erfindungsgemäß vorgesehen, dass der Zahnriemen ein von dem Sensor erfassbares Codemuster aufweist, und der Sensor mit einer Auswerteeinrichtung verbunden ist, die ausgebildet ist, um Abweichungen von einer zu den Riemenrädern synchronen Umlaufbewegung des Zahnriemens zu detektieren.

Erfindungsgemäß wird durch die Überwachung die Detektierung des Funktionszustands des Zahnriemens ermöglicht. Hierzu weist der Zahnriemen ein Codemuster auf, welches in Umlaufrichtung strukturiert ist, bevorzugt durch eine Abfolge einer Mehrzahl von Codemarken. Im Betrieb läuft das Codemuster an dem mindestens einen Sensor in Umlaufrichtung vorbei, der ausgestaltet ist, das Codemuster in ein elektrisches Messsignal umzusetzen, welches mit der zeitlichen Abfolge der vorbeilaufenden Codemarken korreliert ist. Das Messsignal wird einer an den Sensor angeschlossenen Steuerschaltung zugeführt. Durch Vergleich mit vorgegebenen Referenzwerten, welche regulären Betriebsbedingen entsprechen, können Abweichungen erkannt werden, die durch Unregelmäßigkeiten der Umlaufbewegung eine Funktionsstörung anzeigen. Daraus resultiert der Vorteil, dass mit einem geringeren Aufwand als im Stand der Technik allein durch die erfindungsgemäße Codierung des Zahnriemens zusammen mit einer zugeordneten Sensor- und Auswerteeinrichtung der Funktionszustand eines einzelnen Riementriebs sicher überwacht werden kann.

Bei optimaler Kraftübertragung ist die Umlaufbewegung des Riemens synchron zur Umfangsgeschwindigkeit der Riemenräder. Bei einem Zahnriemen wird durch den in Zugrichtung wirksamen Formschluss zwischen den Verzahnungen des Zahnriemens und der Riemenräder die Umlaufbewegung formschlüssig mit der Rotationsbewegung der Riemenräder synchronisiert. Eine Funktionsstörung, beispielsweise ein Zahnsprung, erzeugt durch die dabei auftretende ruckartige Verzögerung einen negativen Geschwindigkeitspeak der Umlaufgeschwindigkeit, der in dem vom Sensor erfassten und an die Auswerteeinheit abgegebenen Messsignal abgebildet wird. Die Auswerteeinrichtung ermöglicht, Abweichungen des Messsignals zu erkennen, die durch Abweichungen der synchronen Umlaufbewegung des Riemens verursacht werden. Dabei können unregelmäßige temporäre Abweichungen beispielsweise durch eine Auswertung der ersten oder zweiten Ableitung der Riemengeschwindigkeit sicher und mit geringem Aufwand erkannt werden. Zusätzlich zu der Zahnsprungdetektion kann noch die Riemendehnung oder die Riemenvorspannung ermittelt werden.

Die Auswerteeinrichtung kann derart ausgestaltet sein, allein durch eine Auswertung der durch den Sensor erfassten Messsignale Abweichungen der synchronen Umlaufbewegung des Zahnriemens zu erkennen, beispielsweise durch eine Mustererkennung, die für einen Zahnsprung charakteristischen Verlauf des Messsignals automatisiert erkennt. In einer Ausgestaltung kann vorgesehen sein, zusätzlich die tatsächliche Ist-Umlaufgeschwindigkeit eines oder beider Riemenräder zu berücksichtigen, die mit dem Durchmesser und der momentanen Umdrehungszahl korreliert. Beispielsweise können entsprechende elektrische Signale in die Auswerteeinheit eingespeist werden, wo ein Vergleich mit dem aus dem Codemuster abgeleiteten Messsignal erfolgen kann. Dadurch kann die Überwachungssicherheit in vorteilhafter Weise erhöht werden.

Es ist vorteilhaft, dass das Codemuster mindestens eine von dem Sensor erfassbare Codemarke aufweist. Eine Codemarke erstreckt sich in Umlaufrichtung des Zahnriemens. Diese ist ausgestaltet, um in dem Sensor einen Zustand des elektrischen Messsignals zu erzeugen, der sich von einem Bereich außerhalb der Codemarke unterscheidet. Bereits durch eine einzelne Codemarke kann so im Prinzip ein Umlauf des Zahnriemens erkannt werden. Vorteilhaft ist es jedoch, dass das Codemuster eine Abfolge von mehreren in Laufrichtung des Zahnriemens aufeinander folgenden Codemarken aufweist. Dadurch kann eine feinere Auflösung und entsprechend eine höhere Messgenauigkeit realisiert werden, im Wesentlichen ohne erhöhten Aufwand. Die Anordnung der Codemarken kann sich über einen Teilabschnitt oder den gesamten Umfang des Zahnriemens erstrecken. Die Codemarken können gleichmäßig beabstandet sein, so dass eine einfache inkrementale Umsetzung der Riemengeschwindigkeit in ein Messsignal erfolgt. Eine vorteilhafte Weiterbildung kann vorsehen, dass eine in Umlaufrichtung unregelmäßige Abfolge realisiert ist, beispielsweise durch in Umlaufrichtung unterschiedlich breite Codemarken und/oder unterschiedlich breite Abstände zwischen den Codemarken. Dadurch kann mit geringem Aufwand eine Erkennung der Laufrichtung des Zahnriemens erfolgen.

Bevorzugt ist vorgesehen, dass das Codemuster von dem Sensor berührungslos erfassbar ist. Mittels eines berührungslosen Messverfahrens kann das Codemuster verschleißfrei und weitgehend unabhängig von potentiellen Störeinflüssen detektiert werden. Daraus resultiert eine erhöhte Funktions- und Betriebssicherheit.

Es kann beispielsweise vorgesehen sein, dass das Codemuster induktiv und/oder optisch und/oder kapazitiv erfassbar ist. Dabei handelt es sich um bewährte und robuste berührungslose Messverfahren. Zur praktischen Realisierung können an dem Zahnriemen angebrachte Codemarken beispielsweise metallische Markierungen, Spulenanordnungen, optische Markierungen und/oder dergleichen aufweisen, die mit passenden Sensoren zusammenwirken. Es ist denkbar und möglich, dass zwei oder mehr unterschiedliche Codemuster-Sensor-Anordnungen vorgesehen sind, beispielsweise Kombinationen aus induktiven und/oder optischen und/oder kapazitiven und/oder magnetischen Messverfahren. Dadurch wird eine redundante Messung ermöglicht, wodurch in vorteilhafter Weise die Mess- und Betriebssicherheit erhöht werden kann.

Es kann vorteilhaft sein, dass das Codemuster außen auf dem Zahnriemen angeordnet ist. Dies kann dadurch realisiert sein, dass Codemarken auf der bezüglich der innen liegenden Zugverzahnung außen liegenden Außenseite derart positioniert sind, dass sie von einem außerhalb des Zahnriemens angeordneten Sensor erfassbar sind. Eine Anordnung des Sensors außerhalb des Riementriebs ist montage- und wartungsfreundlich.

Bevorzugt kann vorgesehen sein, dass das Codemuster in dem Zahnriemen integriert ist. Hierzu können beispielsweise Codemarken unlösbar mit dem Zahnriemen verbunden sein, und beispielsweise teilweise der vollständig in das Material des Zahnriemens eingebettet sein. Dabei können die Codemarken auch in Zugstränge oder in Gewebelagen des Zahnriemens integriert sein. Die Codemarken können beispielsweise induktiv erfassbare Metallmarken aufweisen, die unlösbar mit dem robusten Material des Zahnriemens, wie beispielsweise Polyurethan, Nitril-Butadien-Kautschuk oder dergleichen, verbunden bzw. eingebettet sind. Dadurch wird eine besonders robuste, betriebssichere Messanordnung ermöglicht.

Es ist möglich, dass mindestens zwei Codemuster vorgesehen sind. Dabei können die Codemuster nach demselben Messprinzip arbeiten, oder es können unterschiedliche Messverfahren kombiniert sein, beispielsweise induktive und optische Messverfahren. Dadurch kann eine redundante Messanordnung realisiert sein, bei der durch eine Plausibiltätsprüfung die Betriebssicherheit weiter erhöht werden kann. Darüber hinaus kann eine höhere Messgenauigkeit ermöglicht werden.

Es ist mit Vorteil möglich, dass mindestens zwei Sensoren vorgesehen sind. Durch die mindestens zwei Sensoren können mit geringem Aufwand erweiterte Mess- und Auswertemöglichkeiten realisiert werde. Beispielsweise kann ein einziges Codemuster durch mindestens zwei Sensoren erfasst werden, wobei durch Vergleich der Messwerte ein redundanter Betrieb mit erhöhter Betriebssicherheit ermöglicht wird. Alternativ oder zusätzlich können zwei oder mehr, vom Messprinzip gleichartige oder unterschiedliche Codemuster durch zwei oder mehr Sensoren erfasst werden. Darüber hinaus können erweiterte Auswertemöglichkeiten realisiert sein. Beispielsweise können Messwerte von in unterschiedlichen Umfangsbereichen des Zahnriemens angeordneten Sensoren verglichen werden, beispielsweise auf gegenüberliegenden Riementrumen, wodurch Überlastungen, Verschleiß, oder sonstige Störungen einfach und sicher detektierbar sind.

Vorzugsweise kann vorgesehen sein, dass ein elektromotorischer Lenkungsantrieb den Riementrieb aufweist. In einem Steer-by-Wire-Lenksystem kann der Lenksteller einen oder mehrere erfindungsgemäß ausgestaltete Lenkungsantriebe umfassen. Durch die fehlende mechanische Kopplung der manuellen Lenkeingabe mit den zu lenkenden Rädern ist unter Sicherheitsaspekten eine besonders hohe Betriebssicherheit des Riementriebs erforderlich. Die sichere Erkennung von Fehlfunktionen und Verschleiß wird durch die erfindungsgemäße Ausgestaltung mit geringerem Aufwand als im Stand der Technik ermöglicht.

Es ist ebenfalls denkbar, die Vorteile der Erfindung bei einem Hilfskraftantrieb zu realisieren.

Ein elektromotorischer Lenkungsantrieb kann beispielsweise dadurch realisiert sein, dass ein Riemenrad mit einem Motor gekuppelt ist und ein Riemenrad mit einer Spindelmutter eines Spindeltriebs verbunden ist. Der Spindeltrieb dient zur Umsetzung der Rotation des Riemenrads in eine Linearbewegung eines auf lenkbare Räder wirkenden Aktuators, analog zur Zahnstange eines bekannten Zahnstangen-Lenkgetriebes. Durch die Erfindung wird insbesondere ein kompakterer und leichterer Aufbau als im Stand der Technik ermöglicht.

Bei einem Verfahren zur Überwachung eines Riementriebs eines Lenksystems für ein Kraftfahrzeug, bei dem eine mit dem Riementrieb zusammenwirkende Überwachungseinrichtung mittels eines Sensors einen Funktionszustand des Zahnriemens detektiert, ist erfindungsgemäß vorgesehen, dass der Sensor ein in Laufrichtung erstrecktes Codemuster des Zahnriemens erfasst und Abweichungen der zu den Riemenrädern synchronen Umlaufbewegung des Zahnriemens detektiert. Dabei können sämtliche vorangehend erwähnten Betriebsweisen realisiert sein. Vorteile dabei sind unter anderem, dass das Verfahren mit einer relativ einfach und robust ausgestalteten Sensor-Codemuster-Kombination realisiert werden kann, wobei die Auswertung der Messwerte in der elektronischen Steuereinheit mit geringem Aufwand angepasst und optimiert werden kann, beispielsweise durch in Software implementierte Auswerte-Algorithmen. Dies vereinfacht insbesondere die Integration in die Sicherheitsarchitektur eines Steer-by-Wire-Lenksystems.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines erfindungsgemäßen Steer-by-wire-Lenksystems,
- Figur 2: eine schematische Darstellung eines erfindungsgemäßen Lenkungsantriebs eines Lenksystems gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

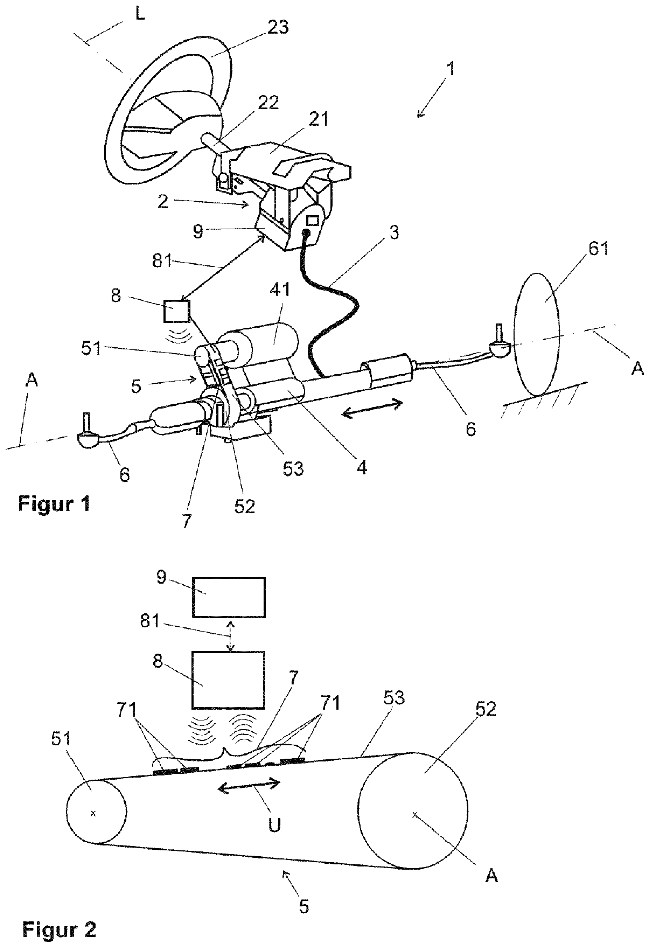

Figur 1 zeigt schematisch ein Steer-by-wire-Lenksystem 1, welches eine Lenksäule 2 umfasst. Diese weist eine an einer nicht gezeigten Fahrzeugkarosserie montierbare Trageinheit 21 auf, von der eine Lenkspindel 22 um ihre Längsachse L drehbar gelagert ist. An ihrem bezüglich der Fahrtrichtung hinteren, fahrerseitigen Ende ist an der Lenkspindel 22 zur Eingabe manueller Lenkbefehle ein Lenkrad 23 drehfest montiert.

In der Lenksäule 2 ist eine im Einzelnen nicht dargestellte Drehwinkel- und Drehmomenterfassungssensorik untergebracht, welche eine als Drehung des Lenkrads 23 in die Lenkspindel 22 eingebrachten Lenkbefehl in ein elektrisches Steuersignal, nämlich ein Lenksignal umsetzt.

Das Steuersignal wird über eine elektrische Steuerleitung 3 an einen erfindungsgemäßen elektrischen Lenkaktuator 4 geleitet.

Der Lenkaktuator 4 weist einen Riementrieb 5 auf, der ein erstes Riemenrad 51 und ein zweites Riemenrad 51 und einen um die Riemenräder 51, 52 als Zugmittel umlaufenden Zahnriemen 53 aufweist.

Das erste Riemenrad 51 ist an einem elektrischen Motor 41 angebracht, und das zweite Riemenrad 52 ist mit einem Spindeltrieb wirkverbunden. Dieser weist in an sich bekannter weise eine - hier nicht ausdrücklich dargestellte - in dem Lenkaktuator 4 axial abgestützt drehbar gelagerte, mit dem Riemenrad 52 gekuppelte Spindelmutter auf. In die Spindelmutter greift eine Gewindespindel ein, die in Richtung ihrer Spindelachse A, die der Rotationsachse des Riemenrads 52 und der Spindelmutter entspricht, längsverschieblich in dem Lenkaktuator gelagert ist, wie mit dem Doppelpfeil angedeutet ist.

Über Spurstangen 6 ist die Gewindespindel in an sich bekannter Weise an lenkbare Räder 61 angelenkt.

Der Riementrieb 5 ist in Figur 2 in einer schematisch freigestellten Ansicht in Richtung der parallelen Rotationsachsen der Riemenräder 51 und 52 gezeigt.

Der Zahnriemen 53 weist ein Codemuster 7 umfassend eine Mehrzahl von Codemarken 71 auf, die auf seiner Außenseite angeordnet sind. Die Codemarken 71 sind in der Umlaufrichtung U, in der sich der Zahnriemen 53 erstreckt, in einer definierten Anordnung jeweils zueinander beabstandet angeordnet. Im gezeigten Beispiel sind die Breiten der Codemarken 71 und die dazwischen liegenden Abstände unregelmäßig angeordnet zur Bildung einer definierten, in Umlaufrichtung codierten Musteranordnung.

Ein Sensor 8 ist relativ zum Riementrieb 5 außerhalb des Zahnriemens 53 positioniert. Dieser ist so angeordnet und ausgestaltet, dass er die Codemarken 71 berührungslos erfassen kann, beispielsweise mit einem induktiven Messaufnehmer, der metallisch ausgebildete Codemarken 71 detektieren kann. Dabei können unterschiedliche berührungslose Messverfahren zum Einsatz kommen. Es ist auch möglich, zwei oder mehr gleichartige oder unterschiedliche Sensoren 8 vorzusehen, die mit entsprechend angepassten Codemarken 71 zusammenwirken.

Der Sensor 8 wandelt das im Betrieb in Umfangsrichtung U vorbeilaufende Codemuster 7 in ein elektrisches Messsignal um, welches einen durch die Abfolge der Codemarken 71 bestimmten Verlauf hat. Dieses Messsignal wird über eine elektrische Steuerleitung 81 in eine elektrische Steuereinheit 9 eingegeben.

In der Steuereinheit 9 wird das Messsignal gemäß einem vorgegebenen Algorithmus automatisiert elektronisch ausgewertet und verarbeitet. Dadurch kann der im normalen Betrieb gleichmäßige, stetige Umlauf des Zahnriemens 53 überwacht werden. Störungen, wie etwa ruckartige Bewegungen durch Zahnsprünge, können durch Analyse des Messsignals und Vergleich mit Referenzwerten sicher detektiert werden.

Auch wenn es zur Realisierung der Erfindung nicht zwingend erforderlich ist, kann zusätzlich vorgesehen sein, dass die Steuereinheit 9 die Ist-Rotationsgeschwindigkeit eines oder beider Riemenräder 51, 52 berücksichtigt, so dass Abweichungen der Umlaufgeschwindigkeit des Zahnriemens direkt erkennbar sind.

### Bezugszeichenliste

- 1: Lenksystem
- 2: Lenksäule
- 21: Trageinheit
- 22: Lenkspindel
- 23: Lenkrad
- 3: Steuerleitung
- 4: Lenkaktuator
- 41: Motor
- 5: Riementrieb
- 51, 52: Riemenrad
- 53: Zahnriemen
- 6: Spurstange
- 61: Rad
- 7: Codemuster
- 71: Codemarke
- 8: Sensor
- 81: Steuerletung
- 9: Steuereinheit
- L: Längsachse
- A: Spindelachse
- U: Umlaufrichtung

## Patentansprüche

1. Lenksystem (1) für ein Kraftfahrzeug, umfassend einen Riementrieb (5), der einen antriebsmäßig um zwei Riemenräder (51, 52) umlaufenden Zahnriemen (53) aufweist, wobei eine mit dem Riementrieb (5) zusammenwirkende Überwachungseinrichtung (8, 9) vorgesehen ist, die mindestens einen Sensor (8) zur Überwachung des Zahnriemens (53) aufweist,
**dadurch gekennzeichnet,**
**dass** der Zahnriemen (53) ein von dem Sensor (8) erfassbares Codemuster (7) aufweist, und der Sensor (8) mit einer Auswerteeinrichtung (9) verbunden ist, die ausgebildet ist, um Abweichungen von einer zu den Riemenrädern (51, 52) synchronen Umlaufbewegung des Zahnriemens (53) zu detektieren.

2. Lenksystem nach Anspruch 1, **dadurch gekennzeichnet, dass** das Codemuster (7) mindestens eine von dem Sensor (8) erfassbare Codemarke (71) aufweist.

3. Lenksystem nach einem der vorangehenden Ansprüche, **dadurch gekennzeichnet, dass** das Codemuster (7) von dem Sensor (8) berührungslos erfassbar ist.

4. Lenksystem nach einem der vorangehenden Ansprüche, **dadurch gekennzeichnet, dass** das Codemuster (7) induktiv und/oder optisch und/oder kapazitiv erfassbar ist.

5. Lenksystem nach einem der vorangehenden Ansprüche, **dadurch gekennzeichnet, dass** das Codemuster (7) außen auf dem Zahnriemen (53) angeordnet ist.

6. Lenksystem nach einem der vorangehenden Ansprüche, **dadurch gekennzeichnet, dass** das Codemuster (7) in dem Zahnriemen (53) integriert ist.

7. Lenksystem nach einem der vorangehenden Ansprüche, **dadurch gekennzeichnet, dass** mindestens zwei Codemuster (7) vorgesehen sind.

8. Lenksystem nach einem der vorangehenden Ansprüche, **dadurch gekennzeichnet, dass** mindestens zwei Sensoren (8) vorgesehen sind.

9. Lenksystem nach einem der vorangehenden Ansprüche, **dadurch gekennzeichnet, dass** ein elektromotorischer Lenkungsantrieb (4) den Riementrieb (5) aufweist.

10. Lenksystem nach Anspruch 9, **dadurch gekennzeichnet, dass** ein Riemenrad (51) mit einem Motor (41) gekuppelt ist und ein Riemenrad (52) mit einer Spindelmutter eines Spindeltriebs verbunden ist.

11. Lenksystem nach einem der vorangehenden Ansprüche, **dadurch gekennzeichnet, dass** es als Steer-by-wire-Lenksystem (1) ausgebildet ist.

12. Verfahren zur Überwachung eines Riementriebs (5) eines Lenksystems (1) für ein Kraftfahrzeug, bei dem eine mit dem Riementrieb (5) zusammenwirkende Überwachungseinrichtung (8, 9) mittels eines Sensors (8) einen Funktionszustand des Zahnriemens (53) detektiert,
**dadurch gekennzeichnet,**
**dass** der Sensor (8) ein in Laufrichtung erstrecktes Codemuster (7) des Zahnriemens (53) erfasst und Abweichungen der zu den Riemenrädern (51, 52) synchronen Umlaufbewegung des Zahnriemens (53) detektiert.

## Claims

1. Steering system (1) for a motor vehicle, comprising a belt drive (5) which has a toothed belt (53) running around two belt wheels (51, 52) in a driving manner, a monitoring device (8, 9) being provided which interacts with the belt drive (5) and has at least one sensor (8) for monitoring the toothed belt (53),
**characterized in**
**in that** the toothed belt (53) has a code pattern (7) which can be detected by the sensor (8), and the sensor (8) is connected to an evaluation device (9) which is designed to detect deviations from a rotational movement of the toothed belt (53) which is synchronous with the belt wheels (51, 52).

2. Steering system according to claim 1, **characterized in that** the code pattern (7) has at least one code mark (71) which can be detected by the sensor (8).

3. Steering system according to one of the preceding claims, **characterized in that** the code pattern (7) can be detected by the sensor (8) without contact.

4. Steering system according to one of the preceding claims, **characterized in that** the code pattern (7) can be detected inductively and/or optically and/or capacitively.

5. Steering system according to one of the preceding claims, **characterized in that** the code pattern (7) is arranged on the outside of the toothed belt (53).

6. Steering system according to one of the preceding claims, **characterized in that** the code pattern (7) is integrated in the toothed belt (53).

7. Steering system according to one of the preceding claims, **characterized in that** at least two code patterns (7) are provided.

8. Steering system according to one of the preceding claims, **characterized in that** at least two sensors (8) are provided.

9. Steering system according to one of the preceding claims, **characterized in that** an electromotive steering drive (4) has the belt drive (5).

10. Steering system according to claim 9, **characterized in that** a belt wheel (51) is coupled to a motor (41) and a belt wheel (52) is connected to a spindle nut of a spindle drive.

11. Steering system according to one of the preceding claims, **characterized in that** it is designed as a steer-by-wire steering system (1).

12. Method for monitoring a belt drive (5) of a steering system (1) for a motor vehicle, in which a monitoring device (8, 9) interacting with the belt drive (5) detects a functional state of the toothed belt (53) by means of a sensor (8),
**characterized in**
**that** the sensor (8) detects a code pattern (7) of the toothed belt (53) extending in the running direction and detects deviations in the rotational movement of the toothed belt (53) synchronous with the belt wheels (51, 52).

## Revendications

1. Système de direction (1) pour un véhicule automobile, comprenant un entraînement à courroie (5) qui présente une courroie crantée (53) tournant en entraînement autour de deux roues à courroie (51, 52), un dispositif de surveillance (8, 9) coopérant avec l'entraînement à courroie (5) étant prévu, lequel présente au moins un capteur (8) pour surveiller la courroie crantée (53),
**caractérisé en ce que**
**en ce que** la courroie dentée (53) présente un modèle de code (7) pouvant être détecté par le capteur (8), et le capteur (8) est relié à un dispositif d'évaluation (9) qui est conçu pour détecter des écarts par rapport à un mouvement de rotation de la courroie dentée (53) synchrone avec les roues de courroie (51, 52).

2. Système de direction selon la revendication 1, **caractérisé en ce que** le modèle de code (7) présente au moins une marque de code (71) pouvant être détectée par le capteur (8).

3. Système de direction selon l'une des revendications précédentes, **caractérisé en ce que** le modèle de code (7) peut être détecté sans contact par le capteur (8).

4. Système de direction selon l'une des revendications précédentes, **caractérisé en ce que** le modèle de code (7) peut être détecté par induction et/ou par voie optique et/ou par voie capacitive.

5. Système de direction selon l'une des revendications précédentes, **caractérisé en ce que** le motif de code (7) est disposé à l'extérieur de la courroie dentée (53).

6. Système de direction selon l'une des revendications précédentes, **caractérisé en ce que** le motif de code (7) est intégré dans la courroie dentée (53).

7. Système de direction selon l'une des revendications précédentes, **caractérisé en ce qu'**au moins deux motifs de code (7) sont prévus.

8. Système de direction selon l'une des revendications précédentes, **caractérisé en ce qu'**il est prévu au moins deux capteurs (8).

9. Système de direction selon l'une des revendications précédentes, **caractérisé en ce qu'**un entraînement de direction à moteur électrique (4) présente l'entraînement par courroie (5).

10. Système de direction selon la revendication 9, **caractérisé en ce qu'**une roue à courroie (51) est couplée à un moteur (41) et une roue à courroie (52) est reliée à un écrou de broche d'un entraînement à broche.

11. Système de direction selon l'une des revendications précédentes, **caractérisé en ce qu'**il est conçu comme un système de direction steer-by-wire (1).

12. Procédé de surveillance d'un entraînement par courroie (5) d'un système de direction (1) pour un véhicule automobile, dans lequel un dispositif de surveillance (8, 9) coopérant avec l'entraînement par courroie (5) détecte un état de fonctionnement de la courroie dentée (53) au moyen d'un capteur (8),
**caractérisé**
**en ce que** le capteur (8) détecte un modèle de code (7) de la courroie dentée (53) s'étendant dans le sens de la marche et détecte des écarts du mouvement de rotation de la courroie dentée (53) synchrone avec les roues de courroie (51, 52).
